# EUROPÄISCHE PATENTSCHRIFT

(11) **EP 4 417 852 B1**
(45) Veröffentlichungstag und Bekanntmachung des Hinweises auf die Patenterteilung: **18.03.2026**
(21) Anmeldenummer: 24156203.2
(22) Anmeldetag: 07.02.2024
(51) Int. Cl.: F16L 33/20, F16L 33/22, F16L 33/23, F16L 41/02

(54) **FLUIDKOPPLUNG ZUR FLUIDISCHEN VERBINDUNG VON FLUIDLEITUNGEN**
FLUID COUPLING FOR THE FLUIDIC CONNECTION OF FLUID LINES
RACCORD FLUIDIQUE POUR RACCORDEMENT FLUIDIQUE DE CONDUITES DE FLUIDE

(30) Priorität: 17.02.2023 DE 102023104050
(43) Veröffentlichungstag der Anmeldung: 21.08.2024
(73) Patentinhaber: Fränkische Rohrwerke Gebr. Kirchner GmbH + Co KG, 97486 Königsberg/Bayern (DE)
(72) Erfinder: Freter, Ludwig, 97437 Haßfurt (DE)
(74) Vertreter: Weickmann & Weickmann PartmbB

(56) Entgegenhaltungen:
- DE-U1- 202006 019 578
- DE-U1- 8 900 869
- DE-U1- 9 109 526
- US-A- 5 228 721

## Beschreibung

Die vorliegende Erfindung betrifft eine Fluidkopplung, welche dazu eingerichtet ist, Fluidleitungen in fluidische Verbindung miteinander zu setzen, wobei die Fluidkopplung einen ersten Fluidanschluss, welcher dazu eingerichtet ist, mit einer ersten der Fluidleitungen fluidisch verbunden zu werden, und einen zweiten Fluidanschluss umfasst, welcher dazu eingerichtet ist, mit einer zweiten der Fluidleitungen fluidisch verbunden zu werden.

Aus dem Dokument DE 91 09 526 U1, welches als nächstliegender Stand der Technik erachtet wird, ist eine Fluidkopplung bekannt, umfassend einen ersten Fluidanschluss, einen zweiten Fluidanschluss, ein Kernelement und Schalenelemente, wobei die Schalenelemente das Kernelement außen umgeben. Ferner sei auf die Dokumente DE 20 2006 019578 U1, DE 89 00 869 U1 und US 5 228 721 A hingewiesen.

Bekannte Fluidkopplungen weisen oftmals einen komplizierten Aufbau auf, bei welchem Abschnitte der Fluidkopplung, welche zum Führen von Fluid eingerichtet sind, und Abschnitte der Fluidkopplung, welche zum Verpressen einer Fluidleitung an der Fluidkopplung eingerichtet sind, einstückig ineinander übergehen. Hierdurch kann die Komplexität der Fluidkopplung und die damit einhergehenden Herstellkosten, aber auch die Anforderungen an das entsprechend verwendete Material, sehr hoch sein.

Es ist daher die Aufgabe der vorliegenden Erfindung, eine kostengünstige und sichere Verbindung von Fluidleitungen bereitzustellen, welche die oben genannten Nachteile überwinden kann.

Diese Aufgabe wird erfindungsgemäß durch eine Fluidkopplung gelöst, welche dazu eingerichtet ist, Fluidleitungen in fluidische Verbindung miteinander zu setzen, wobei die Fluidkopplung umfasst:
- einen ersten Fluidanschluss, welcher dazu eingerichtet ist, mit einer ersten der Fluidleitungen fluidisch verbunden zu werden,
- einen zweiten Fluidanschluss, welcher dazu eingerichtet ist, mit einer zweiten der Fluidleitungen fluidisch verbunden zu werden, und
- wenigstens zwei Schalenelemente,

wobei die Fluidanschlüsse voneinander getrennt ausgebildet sind,
wobei die Fluidanschlüsse miteinander in fluidischer Verbindung stehen, um die mit der Fluidkopplung verbundenen Fluidleitungen miteinander fluidisch zu verbinden,
wobei die Fluidanschlüsse einstückig an einem gemeinsamen Kernelement der Fluidkopplung ausgebildet sind,
wobei die wenigstens zwei Schalenelemente dazu eingerichtet sind, das Kernelement zumindest an jedem aus dem ersten und zweiten Fluidanschluss an dessen jeweiliger radialer Außenseite zu umgeben,
wobei die Fluidkopplung ferner je Fluidanschluss eine Presshülse umfasst, welche dazu eingerichtet ist, an einem einen jeweiligen Fluidanschluss radial außen umgebenden Abschnitt der wenigstens zwei Schalenelemente aufgenommen zu werden,
wobei die jeweilige Presshülse ferner dazu eingerichtet ist, auf eine von radial außen auf die Presshülse einwirkende Kraft nach radial innen plastisch deformiert zu werden, so dass eine entsprechende Fluidleitung mit dem jeweils zugeordneten Fluidanschluss zerstörungsfrei unlösbar verbunden wird.

Durch das Aufteilen der Fluidkopplung in das Kernelement, welchem die Hauptaufgabe zukommt, Fluid zu leiten und in Schalenelemente, welchen die Hauptaufgabe zukommt, die Presshülsen relativ zu dem Kernelement zu halten, kann eine Wandungsstärke des Kernelements im Vergleich zu bekannten Fluidkopplungen (ein entsprechender Abschnitt ist bei diesen oftmals als "Stützkörper" oder "Stützelement" bezeichnet) deutlich reduziert werden. Hierdurch kann insbesondere ein größerer Innendurchmesser der Fluidanschlüsse bzw. des Kernelements vorgesehen werden, wodurch die Strömungseigenschaften des Fluids durch die Fluidkopplung verbessert werden können. Des Weiteren können durch die voranstehend erwähnte Aufteilung der Fluidkopplung in Kernelement und Schalenelemente gezielt die für den jeweiligen Einsatzzweck vorteilhaften Materialien gewählt werden, sodass, trotz eines möglicherweise gesteigerten Materialbedarfs durch die Aufteilung der Fluidkopplung, dennoch eine Kostenreduktion erzielt werden kann. Insbesondere kann für die Schalenelemente ein vergleichsweise kostengünstiges Material gewählt werden.

Ferner sei darauf hingewiesen, dass der Ausdruck, dass "die wenigstens zwei Schalenelemente dazu eingerichtet sind, das Kernelement zumindest an jedem aus dem ersten und zweiten Fluidanschluss an dessen jeweiliger radialer Außenseite zu umgeben", nicht zwangsläufig ein vollständiges Umgeben des jeweiligen Fluidanschlusses durch die Schalenelemente umfassen muss, sondern auch ein lediglich teilweises Umgeben des jeweiligen Fluidanschlusses durch die Schalenelemente hier denkbar sein kann.

Um eine jeweilige Presshülse an ihrer Position an den Schalenelementen im zusammengebauten Zustand der Fluidkopplung zu sichern, kann an dem jeweils zugehörigen freien Ende der Schalenelemente, an welchen eine Presshülse angeordnet ist, wenigstens eine Rastnase vorgesehen sein, welche dazu eingerichtet ist, mit der dort angeordneten Presshülse einzugreifen.

In einer beispielhaften Ausführungsform der erfindungsgemäßen Fluidkopplung kann diese zusätzlich einen dritten Fluidanschluss umfassen, welcher dazu eingerichtet ist, mit einer dritten Fluidleitung fluidisch verbunden zu werden. Somit kann die Fluidkopplung als Abzweigungsstück oder als Zusammenführungsstück der darin geführten Fluide fungieren. Dabei kann der erste Fluidanschluss beziehungsweise die Achse des zugehörigen Fluidströmungskanals und/oder der dritte Fluidanschluss beziehungsweise die Achse des zugehörigen Fluidströmungskanals zu dem zweiten Fluidanschluss beziehungsweise zu der Achse des zugehörigen Fluidströmungskanals einen Winkel von im Wesentlichen 90° bilden, wobei insbesondere ferner der erste Fluidanschluss beziehungsweise die Achse des zugehörigen Fluidströmungskanals zu dem dritten Fluidanschluss beziehungsweise zu der Achse des zugehörigen Fluidströmungskanals einen Winkel von im Wesentlichen 180° bilden kann. Basierend auf der voranstehend dargelegten Anordnung der Fluidanschlüsse zueinander kann die Fluidkopplung und insbesondere das Kernelement der Fluidkopplung im Wesentlichen eine T-Form aufweisen.

Insbesondere im Fall einer erfindungsgemäßen Fluidkopplung mit zwei Fluidanschlüssen kann eine Rotationssicherung des Kernelements relativ zu wenigstens einem Schalenelement, insbesondere beiden oder allen Schalenelementen, vorgesehen sein. Diese Rotationssicherung kann zum Beispiel durch einen entsprechenden Vorsprung am Kernelement realisiert werden, welcher sich an wenigstens einem Schalenelement abstützt.

Vorteilhafterweise kann das Kernelement an seiner Außenseite wenigstens eine Ausnehmung, insbesondere wenigstens zwei Ausnehmungen, aufweisen, welche dazu eingerichtet ist, mit jeweils einem dazu passenden Vorsprung einzugreifen, welcher von einer Innenseite wenigstens eines Schalenelements vorsteht. Auf diese Weise kann das Kernelement relativ zu den Schalenelementen zumindest in einer axialen Richtung, bezogen auf eine Haupterstreckungsrichtung des Fluidströmungskanals des Kernelements, insbesondere auch in einer rotatorischen Richtung, gesichert werden. Natürlich ist es ganz allgemein ebenfalls denkbar, die Anordnung von Vorsprung und Ausnehmung vollständig oder teilweise umzukehren, sodass das Kernelement an seiner Außenseite wenigstens einen Vorsprung aufweist und wenigstens ein Schalenelement an seiner Innenseite wenigstens eine zugehörige Ausnehmung aufweist.

Hierbei kann die wenigstens eine Ausnehmung als eine an der Außenseite des Kernelements vollständig umlaufende Nut ausgebildet sein. Dies kann ermöglichen, dass das Kernelement in den Schalenelementen in mehr als einer einzigen Relativstellung des Kernelements zu den Schalenelementen in diesen aufgenommen werden kann. Zum Beispiel kann es denkbar sein, dass das Kernelement relativ zu den Schalenelementen in einer ersten Relativstellung und in einer zweiten Relativstellung aufgenommen werden kann, welche relativ zu der ersten Relativstellung um die Achse eines der Fluidanschlüsse um 180° gedreht ist.

In diesem Zusammenhang kann ferner der Vorsprung, welcher dazu eingerichtet ist, mit der zugehörigen Ausnehmung des Kernelements im montierten Zustand der Fluidkopplung einzugreifen, derart über die wenigstens zwei Schalenelemente aufgeteilt ausgebildet sein, dass sich die Vorsprungsteile der Schalenelemente im montierten Zustand der Fluidkopplung zu einem im Wesentlichen vollständig um das Kernelement umlaufenden Vorsprung ergänzen. In anderen Worten kann der Vorsprung auf wenigstens zwei der Schalenelemente derart verteilt werden, dass sich der vollständig um das Kernelement umlaufende Vorsprung erst im zusammengebauten Zustand der Fluidkopplung beziehungsweise der Schalenelemente ergibt. Auf diese Weise kann das Kernelement einfach in eines der Schalenelemente so eingelegt werden, dass dessen Ausnehmung (oder gegebenenfalls dessen Vorsprung) mit dem Vorsprungsteil (oder gegebenenfalls einem Ausnehmungsteil) eines Schalenelements eingreift und anschließend kann das wenigstens eine weitere Schalenelement montiert werden. So ergibt sich bei der Montage der Fluidkopplung zuerst eine Positionssicherung des Kernelements an dem ersten Schalenelement und dann eine Positionssicherung des wenigstens einen weiteren Schalenelements an dem Kernelement, und folglich auch des wenigstens einen weiteren Schalenelements relativ zu dem ersten Schalenelement.

In möglichen Weiterbildungen der vorliegenden Erfindung kann jeder der Fluidanschlüsse des Kernelements an seiner Außenseite eine Mehrzahl von rippenartigen Erhebungen aufweisen, welche dazu eingerichtet ist, auf eine Anordnung einer Fluidleitung an dem Fluidanschluss und ein Verpressen der Presshülse hin, mit der Fluidleitung in Eingriff zu treten, um diese gegenüber Auszugskräften zu sichern, und/oder kann in einem jeweiligen Bereich der wenigstens zwei Schalenelemente, welcher einen Fluidanschluss radial außen umgibt, an einer Innenseite der Schalenelemente eine Mehrzahl von rippenartigen Erhebungen angeordnet sein, welche dazu eingerichtet ist, auf eine Anordnung einer Fluidleitung an dem Fluidanschluss und ein Verpressen der Presshülse hin, mit der Fluidleitung in Eingriff zu treten, um diese gegenüber Auszugskräften zu sichern. Diese rippenartigen Erhebungen können beim Verpressen der Presshülse und damit der Fluidkopplung mit der Fluidleitung in das Material der Fluidleitung an deren Innenseite und/oder Außenseite eindringen, um die Sicherung der Fluidleitung an der Fluidkopplung zu verbessern.

Dabei kann es vorteilhaft sein, dass, entlang der Achse des Fluidströmungskanals eines jeweiligen Fluidanschlusses betrachtet, die rippenartigen Erhebungen an dem Kernelement und die rippenartigen Erhebungen an den Schalenelementen in einer alternierenden, und insbesondere zueinander gleich beabstandeten, Weise angeordnet sind, das heißt, dass entlang der voranstehend erwähnten Achse betrachtet, über wenigstens einen Teil des Fluidanschlusses hinweg immer abwechselnd eine rippenartige Erhebung an dem Kernelement, eine rippenartige Erhebung an den Schalenelementen, eine rippenartige Erhebung an dem Kernelement und so weiter angeordnet sind.

Die jeweiligen Fluidanschlüsse der erfindungsgemäßen Fluidkopplung zur Verbindung mit einer jeweiligen Fluidleitung können insbesondere derart ausgebildet sein, dass sie frei von gesondert ausgebildeten beziehungsweise angeordneten Dichtungselementen, wie beispielsweise O-Ringen, sind. Für eine derartige O-Ring-freie Verbindung zwischen Fluidkopplung und Fluidleitung kann eine möglichst radiale Verformung der Presshülse ohne eine Gratbildung vorteilhaft sein, da eine solche Gratbildung örtlich zu einer Undichtigkeit führen kann. Hierzu kann eine spezielle Form von Pressbacken verwendet werden, welche eine solche Gratbildung reduzieren oder sogar verhindern kann.

Ferner kann an wenigstens einem der Schalenelemente ein Anschlag vorgesehen sein, welcher dazu eingerichtet ist, ein Aufschieben einer jeweiligen Fluidleitung auf einen Fluidanschluss zu begrenzen, wobei insbesondere der Anschlag für die Fluidleitung an dem Vorsprung zum Eingriff mit dem Kernelement ausgebildet sein kann, und/oder kann an wenigstens einem der Schalenelemente eine Kontaktfläche vorgesehen sein, welche dazu eingerichtet ist, ein Aufschieben einer jeweiligen Presshülse auf die Schalenelemente im montierten Zustand der Fluidkopplung zu begrenzen, wobei insbesondere ein Abstand des Anschlags für die Fluidleitung von einem benachbarten freien Ende der Schalenelemente im montierten Zustand der Fluidkopplung größer sein kann als ein Abstand der Kontaktfläche für die Presshülse von demselben freien Ende der Schalenelemente. Ergänzend sei hier hinzugefügt, dass der jeweilige Abstand vom Anschlag beziehungsweise der Kontaktfläche zu dem benachbarten freien Ende der Schalenelemente vorteilhafterweise entlang einer Richtung gemessen werden kann, welche zu einer Mittelachse des Fluidströmungskanals des jeweiligen Fluidanschlusses im Wesentlichen parallel ist. Zum einen ergibt sich durch den Anschlag für die Fluidleitung und die Kontaktfläche für die Presshülse eine definierte Endposition für die Fluidleitung beziehungsweise für die Presshülse und andererseits kann in dem Fall, dass der Abstand des Anschlags für die Fluidleitung von dem benachbarten freien Ende der Schalenelemente größer ist als der Abstand der Kontaktfläche für die Presshülse von demselben freien Ende der Schalenelemente, gewährleistet sein, dass die Presshülse beziehungsweise die radial innerhalb der Presshülse angeordneten Abschnitte der Schalenelemente vollständig mit der Fluidleitung in Eingriff treten, wenn die Presshülse verpresst wird.

Die Kontaktfläche für die Presshülse kann ferner auch eine Ausrichtungshilfe für die Pressbacke zum Verpressen der Presshülse bereitstellen.

Insbesondere können die wenigstens zwei Schalenelemente Kunststoff, insbesondere Polybutylenterephthalat (PBT) und/oder faserverstärkte Polymere, wie Polyamid und/oder Polypropylen, umfassen, und/oder das Kernelement kann Kunststoff, insbesondere Polyoxymethylen oder vernetztes Polyethylen, umfassen. Wie bereits eingangs erwähnt, kann somit für das Kernelement ein hochfunktionales Material ausgewählt werden, welches beispielsweise besonders temperaturbeständig und/oder säurebeständig ist. Für die Schalenelemente kann hingegen ein Material ausgewählt werden, welches beispielsweise hohen mechanischen Beanspruchungen (z.B. Schlägen) standhalten kann.

Vorzugsweise können die wenigstens zwei Schalenelemente als zueinander identische Schalenelemente ausgebildet sein. So kann die Anzahl von unterschiedlichen Komponenten der Fluidkopplung reduziert werden, wodurch wiederum Werkzeug- und Herstellungskosten reduziert werden können. Ferner kann so die Anordnung der Schalenelemente an dem Kernelement zueinander austauschbar sein, wodurch wiederum die Wahrscheinlichkeit für Montagefehler beim Zusammenbau der Fluidkopplung reduziert werden kann.

Die wenigstens zwei Schalenelemente können frei von zueinander kompatiblen Rastelementen sein, welche dazu eingerichtet sind, die Schalenelemente aneinander zu sichern. In diesem Fall können die Schalenelemente relativ zueinander dadurch gesichert werden, dass sie jeweils durch Eingriff mit dem Kernelement relativ zu diesem gesichert sind.

Ferner können die wenigstens zwei Schalenelemente im montierten Zustand der Fluidkopplung, mit Ausnahme der Bereiche der Schalenelemente, welche die Fluidanschlüsse radial außerhalb überlagern, im Wesentlichen geschlossen ausgebildet sein. Der Ausdruck "im Wesentlichen" kann hier explizit umfassen, dass ein Grenzbereich zwischen zwei zueinander benachbarten Schalenelementen gegebenenfalls einen schmalen Spalt aufweisen kann und somit insbesondere nicht wasserdicht ausgebildet sein kann. Die übrige im Wesentlichen geschlossene Ausbildung der Schalenelemente kann das Kernelement insbesondere vor mechanischen Beschädigungen schützen, welche auf die Fluidkopplug einwirken.

Im Rahmen der vorliegenden Erfindung kann eine jeweilige Presshülse als im Wesentlichen zylindrische Metallhülse ausgebildet sein. Dabei kann die zylindrische Form der Metallhülse insbesondere kreiszylindrisch sein.

Ferner kann eine jeweilige Presshülse an wenigstens einem Längsende, insbesondere an beiden Längsenden, einen Bund aufweisen. Ein solcher Bund kann derart ausgebildet sein, dass eine Wandstärke der Presshülse im Vergleich zu dem im Wesentlichen zylindrischen Abschnitt der Presshülse in etwa gleich verbleibt, dass im Bereich des Bunds aber eine Innendurchmesservergrößerung der Presshülse stattfindet. In anderen Worten kann ein Bund dadurch gebildet werden, dass sich die Presshülse im Bereich eines Bunds zumindest an ihrer Außenseite, insbesondere auch an ihrer Innenseite, nach radial außen aufweitet.

Alternativ kann die Presshülse derart ausgebildet sein, dass sie einen im Wesentlichen konstanten Innendurchmesser von ihrem einen Längsende zu dem anderen Längsende aufweist. Dies kann den Eingriff mit einer Rastnase, welche an einem freien eines Schalenelements angeordnet ist, mit einem Längsende der Presshülse, um die Presshülse gegen ein ungewolltes Lösen von den Schalenelementen zu sichern, weiter verbessern.

Vorteilhafterweise können die wenigstens zwei Schalenelemente an ihren Außenseiten in einem Bereich, welcher zwischen den Fluidanschlüssen angeordnet ist, eine sich nach radial außen erstreckende Auswölbung aufweisen. Dabei ist es sowohl denkbar, dass im Bereich einer jeweiligen Auswölbung eine Steigerung der Wandstärke im Vergleich zu zu der Auswölbung benachbarten Abschnitten des entsprechenden Schalenelements auftritt, als auch, dass eine Wandstärke im Bereich einer Auswölbung im Vergleich zu einem zu der Auswölbung benachbarten Bereich desselben Schalenelements im Wesentlichen gleich verbleibt. Eine solche Auswölbung kann eine mechanische Stabilität, wie beispielsweise eine Verwindungssteifigkeit, des Schalenelements verbessern. Die Auswölbung an der radial äußeren Seite eines Schalenelements kann dabei in etwa den Verlauf des zugehörigen Kernelements der Fluidkopplug nachbilden. So kann beispielsweise bei einem T-förmigen Kernelement ein zugehöriges im Wesentlichen T-förmiges Schalenelement eine im Wesentlichen T-förmige Auswölbung aufweisen.

Erfindungsgemäß weisen die wenigstens zwei Schalenelemente in dem Bereich, welcher zur Aufnahme einer jeweiligen Presshülse eingerichtet ist, eine Mehrzahl an federnden Stegen auf. Wobei sich die Stege im montierten Zustand der Fluidkopplung parallel zueinander erstrecken können. Diese Stege können sich zumindest über die axiale Länge der entsprechenden Presshülse erstrecken. Weiter bevorzugt können sich die federnden Stege beziehungsweise die Schlitze, welche die Schalenelemente durchdringen und somit, in einer Umfangsrichtung betrachtet, die aufeinanderfolgenden federnden Stege definieren, von dem freien Ende der Schalenelemente bis wenigstens zu der Kontaktfläche für die Presshülse, insbesondere sogar durch die Kontaktfläche für die Presshülse hindurch, erstrecken. In dem Fall, dass sich die federnden Stege beziehungsweise die dazwischen angeordneten Schlitze durch die Kontaktfläche für die Presshülse hindurch erstrecken, können die Abschnitte der Schlitze, welche an derjenigen Seite der Presshülse angeordnet sind, die dem freien Ende der Schalenelemente entgegengesetzt ist, ein Sichtfenster bilden, welches dazu geeignet ist, um von einer Außenseite her kontrollieren zu können, ob eine jeweilige Fluidleitung bis zu dem dafür vorgesehenen Anschlag in die Fluidkopplung eingeschoben worden ist oder nicht. Der Schlitz beziehungsweise die Schlitze, welcher/welche in Umfangsrichtung relativ zu einer Mittelachse des zugehörigen Fluidanschlusses betrachtet zueinander benachbarte Stege voneinander trennt/trennen, kann/können auch dazu eingerichtet sein, die Presskräfte zu reduzieren, welche zum radialen Deformieren der federnden Stege und damit auch der daran angeordneten Presshülse notwendig sind. Insbesondere können die Schlitze eines einzelnen Schalenelements das Schalenelement in einer zueinander parallel verlaufenden Richtung durchbrechen. Auf diese Weise können Kerne, welche bei der Herstellung unter Verwendung eines Spritzgussverfahrens zur Anwendung kommen, in einer einfachen Weise parallel zueinander aus dem hergestellten Schalenelement entfernt werden. Die Schlitze der Fluidkopplung, welche einem jeweiligen Fluidanschluss zugeordnet sind, können so ausgebildet sein, dass sie im verpressten Zustand des Fluidanschlusses mit der Fluidleitung im Wesentlichen lückenlos aneinander anliegen und insbesondere einen geschlossenen Ring bilden, sodass von einer Außenseite her erkannt werden kann, ob die Fluidkopplung an dieser Stelle in einer korrekten Weise mit der Fluidleitung verpresst worden ist.

Im Folgenden wird die vorliegende Erfindung anhand eines Ausführungsbeispiels mit Bezug auf die begleitenden Zeichnungen beschrieben werden. Es stellt dar:
- Figur 1: eine perspektivische Ansicht eines Schalenelements und eines Kernelements einer erfindungsgemäßen Fluidkopplung;
- Figur 2: eine Seitenansicht des Schalenelements aus Figur 1; und
- Figur 3: eine Seitenquerschnittsansicht einer Fluidkopplung, welche an ihre in Figur 3 rechten Seite mit einer Fluidleitung verbunden, jedoch nicht verpresst, ist.

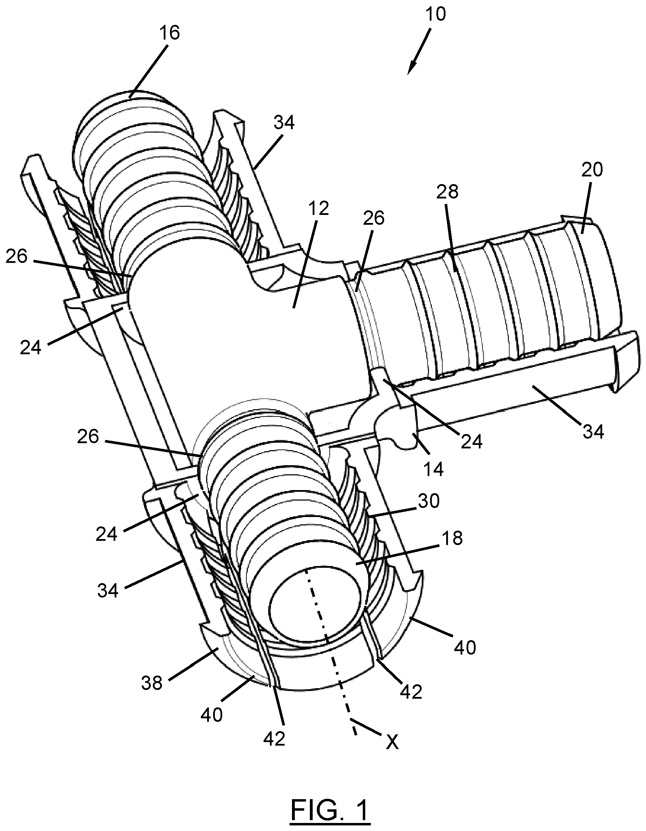

In Figur 1 ist eine erfindungsgemäße Fluidkopplung allgemein mit dem Bezugszeichen 10 bezeichnet. Die Fluidkopplung 10 umfasst hier ein Kernelement 12 und ein Schalenelement 14. An dem Kernelement 12 ist ein erster Fluidanschluss 16, ein zweiter Fluidanschluss 18 und ein dritter Fluidanschluss 20 angeordnet, welche jeweils in ihrem Inneren einen Fluidströmungskanal definieren, wobei die Fluidströmungskanäle der drei Fluidanschlüsse 16, 18, 20 miteinander in fluidischer Verbindung stehen.

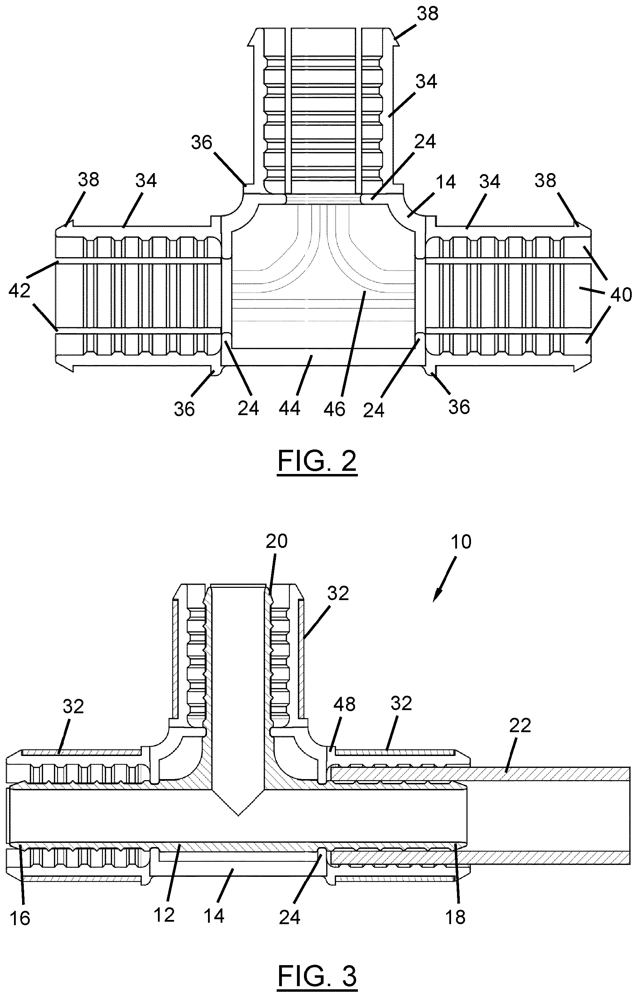

Die drei Fluidanschlüsse 16, 18, 20 sind jeweils dazu eingerichtet, in eine entsprechende Fluidleitung 22 (siehe Figur 3) eingeführt zu werden. Um dem Einführen einer jeweiligen Fluidleitung 22 eine definierte Endposition zuzuweisen, ist im Bereich jedes Fluidanschlusses ein Anschlag 24 vorgesehen, welcher dazu eingerichtet ist, ein Aufschieben einer jeweiligen Fluidleitung 22 auf einen Fluidanschluss 16, 18, 20 zu begrenzen. Der Anschlag 24 ist hier jeweils als eine Fläche eines Vorsprungs ausgebildet, welcher von einer Innenseite des Schalenelements 14 nach radial innen vorsteht. Dabei greift ein jeweiliger Vorsprung 24 an seiner radial inneren Seite mit einer entsprechenden Ausnehmung 26 ein, welche an dem Kernelement 12 ausgebildet ist. Die drei Ausnehmungen 26 sind hier als, in Bezug auf eine Achse eines jeweiligen Fluidanschlusses (in Figur 1 ist beispielhaft am Fluidanschluss 18 die Mittelachse des zugehörigen Fluidströmungskanals mit dem Bezugszeichen X versehen), vollständig umlaufende Nut ausgebildet. Somit kann das Kernelement 12 in das Schalenelement 14 eingelegt werden und relativ zu diesem zumindest translatorisch gesichert werden.

In Figur 1 ist des Weiteren zu erkennen, dass an einer Außenseite eines jeweiligen Fluidanschlusses 16, 18, 20 rippenartige Erhebungen 28 vorgesehen sind, welche dazu eingerichtet sind, mit einer Innenwandung einer darauf aufgeschobenen Fluidleitung 22 einzugreifen.

Des Weiteren ist zu erkennen, dass das Schalenelement 14 im Bereich eines jeweiligen Fluidanschlusses 16, 18, 20 an seiner zu dem jeweiligen Fluidanschluss 16, 18, 20 weisenden Innenseite ebenfalls rippenartige Erhebungen 30 aufweist. Diese rippenartigen Erhebungen 30 des Schalenelements 14 sind dazu eingerichtet, auf ein Verpressen einer jeweiligen Presshülse 32 (siehe Figur 3) hin mit einer Außenseite einer jeweiligen Fluidleitung 22 einzugreifen. Es sei an dieser Stelle hinzugefügt, dass die vollständige Fluidkopplung 10 gemäß Figuren 1 bis 3 ferner ein weiteres (nicht dargestelltes) Schalenelement umfasst, welches in dem Ausführungsbeispiel der Figuren 1 bis 3 zu dem dort gezeigten Schalenelement 14 identisch ist und nach der Anordnung des Kernelements 12 in dem Schalenelement 14 in einer dazu analogen Weise derart auf das Kernelement 12 aufgelegt wird, dass die Vorsprünge 24 des weiteren Schalenelements mit den Ausnehmungen 26 des Kernelements 12 eingreifen. Anschließend wird auf die durch die beiden Schalenelemente gebildete Schale im Bereich jedes Fluidanschlusses 16, 18, 20 eine Presshülse 32 auf einen Bereich 34 aufgeschoben. An einem einem jeweiligen freien Ende des Schalenelements 14, im Bereich eines Fluidanschlusses 16, 18, 20, entgegengesetzten Ende des Bereichs 34 ist eine Kontaktfläche 36 vorgesehen, an welcher die entsprechende Presshülse 32 in einer dadurch definierten Endposition anliegen kann. In dieser Endposition greift hier auch eine Rastnase 38, welche am freien eines Schalenelements 14 angeordnet ist, mit einem Längsende der Presshülse 32 ein, um die Presshülse 32 gegen ein ungewolltes Lösen von den Schalenelementen 14 zu sichern. Die Presshülse 32 weist hier einen im Wesentlichen konstanten Innendurchmesser von ihrem einen Längsende zu dem anderen Längsende auf.

Um ein Verpressen einer jeweiligen Presshülse 32 und damit einen Eingriff des jeweiligen Bereichs 34 des Schalenelements 14 mit der Fluidleitung 22 zu ermöglichen beziehungsweise zu erleichtern, ist jeder Bereich 34 des Schalenelements 14 in federnde Stege 40 unterteilt, welche durch Schlitze 42 voneinander getrennt sind. Dabei ist in Figur 1 auch zu erkennen, dass die Schlitze 42 die Wandung des Schalenelements 14 in einer parallelen Weise durchbrechen, das heißt, die Schlitze 42 begrenzende Flächen des Materials des Schalenelements 14 sind zueinander parallel ausgerichtet (siehe auch Figur 2). Diese Ausbildung der Schlitze 42 kann ermöglichen, dass in verpresstem Zustand der Fluidkopplung 10 mit einer jeweiligen Fluidleitung 22 die einzelnen federnden Stege 40 zumindest an ihren freien Enden miteinander in Kontakt stehen, das heißt, dass die Schlitze 42 dort dann geschlossen sind.

In Figur 2 ist außerdem zu erkennen, dass in einem Bereich 44, welcher sich zwischen den Bereichen 34 des Schalenelements 14 erstreckt, eine Auswölbung 46 angeordnet ist, an welcher die Wandung des Schalenelements 14 nach radial außen (in Figur 2 in die Blattebene hinein) hervortritt. In dem in Figur 2 gezeigten Ausführungsbeispiel kann dabei eine Wandstärke der Wandung des Schalenelements 14 im Bereich der Auswölbung 46 im Vergleich zu dazu benachbarten Abschnitten des Bereichs 44 im Wesentlichen gleich bleiben.

In Figur 3 ist die erfindungsgemäße Fluidkopplung 10 als Seitenquerschnittsansicht im unverpressten Zustand, aber mit einer an dem zweiten Fluidanschluss 18 angeordneten Fluidleitung 22 dargestellt. In Figur 3, so wie auch in Figur 2, ist zu erkennen, dass sich die Schlitze 42 von den freien Enden der Bereiche 34 des Schalenelements 14 durch die Kontaktfläche 36 für die Presshülse 32 hindurch erstreckt und dass die Schlitze 42 zu einem jeweiligen Vorsprung / Anschlag für die Fluidleitung 24 direkt benachbart oder an diesem enden. Das heißt, ein jeweiliger Vorsprung 24 ist in dieser Ausführungsform von dem zugeordneten freien Ende des Bereichs 34 weiter entfernt als die zugehörige Kontaktfläche 36. Auf diese Weise wird ein Sichtfenster 48 gebildet, welches von der jeweiligen Presshülse 32 nicht überlagert wird, durch welches hindurch ein Benutzer der Fluidkopplung 10 erkennen kann, ob die jeweilige Fluidleitung 22 in einer korrekten Weise bis zum Vorsprung 24 eingeschoben worden ist oder nicht.

## Patentansprüche

1. Fluidkopplung (10), welche dazu eingerichtet ist, Fluidleitungen (22) in fluidische Verbindung miteinander zu setzen, wobei die Fluidkopplung (10) umfasst:
- einen ersten Fluidanschluss (16), welcher dazu eingerichtet ist, mit einer ersten der Fluidleitungen fluidisch verbunden zu werden,
- einen zweiten Fluidanschluss (18), welcher dazu eingerichtet ist, mit einer zweiten der Fluidleitungen (22) fluidisch verbunden zu werden, und
- wenigstens zwei Schalenelemente (14),
wobei die Fluidanschlüsse (16, 18, 20) voneinander getrennt ausgebildet sind,
wobei die Fluidanschlüsse (16, 18, 20) miteinander in fluidischer Verbindung stehen, um die mit der Fluidkopplung (10) verbundenen Fluidleitungen (22) miteinander fluidisch zu verbinden,
wobei die Fluidanschlüsse (16, 18, 20) einstückig an einem gemeinsamen Kernelement (12) der Fluidkopplung (10) ausgebildet sind, wobei die wenigstens zwei Schalenelemente (14) dazu eingerichtet sind, das Kernelement (12) an jedem der ersten und zweiten Fluidanschlüsse (16, 18) an deren jeweiliger radialer Außenseite zu umgeben,
**dadurch gekennzeichnet, dass** die Fluidkopplung (10) ferner je Fluidanschluss (16, 18, 20) eine Presshülse (32) umfasst, welche dazu eingerichtet ist, an einem einen jeweiligen Fluidanschluss (16, 18, 20) radial außen umgebenden Abschnitt (34) der wenigstens zwei Schalenelemente (14) aufgenommen zu werden,
wobei die jeweilige Presshülse (32) ferner dazu eingerichtet ist, auf eine von radial außen auf die Presshülse (32) einwirkende Kraft nach radial innen plastisch deformiert zu werden, so dass eine entsprechende Fluidleitung (22) mit dem jeweils zugeordneten Fluidanschluss (16, 18, 20) zerstörungsfrei unlösbar verbunden wird, und
wobei die wenigstens zwei Schalenelemente (14) in dem Bereich, welcher zur Aufnahme einer jeweiligen Presshülse (32) eingerichtet ist, eine Mehrzahl an federnden Stegen (40) aufweisen, wobei sich die Stege (40) im montierten Zustand der Fluidkopplung (10) insbesondere parallel zueinander erstrecken.

2. Fluidkopplung (10) nach Anspruch 1,
**dadurch gekennzeichnet, dass** das Kernelement (12) an seiner Außenseite wenigstens eine Ausnehmung (26), insbesondere wenigstens zwei Ausnehmungen (26), aufweist, welche dazu eingerichtet ist, mit jeweils einem dazu passenden Vorsprung (24) einzugreifen, welcher von einer Innenseite wenigstens eines Schalenelements (14) vorsteht.

3. Fluidkopplung (10) nach dem vorhergehenden Anspruch,
**dadurch gekennzeichnet, dass** die wenigstens eine Ausnehmung (26) als eine an der Außenseite des Kernelements (12) vollständig umlaufende Nut ausgebildet ist.

4. Fluidkopplung (10) nach Anspruch 2 oder 3,
**dadurch gekennzeichnet, dass** der Vorsprung (24), welcher dazu eingerichtet ist, mit der zugehörigen Ausnehmung (26) des Kernelements (12) im montierten Zustand der Fluidkopplung (10) einzugreifen, derart über die wenigstens zwei Schalenelemente (14) aufgeteilt ausgebildet ist, dass sich die Vorsprungsteile der Schalenelemente (14) im montierten Zustand der Fluidkopplung (10) zu einem im Wesentlichen vollständig um das Kernelement (12) umlaufenden Vorsprung (24) ergänzen.

5. Fluidkopplung (10) nach einem der vorhergehenden Ansprüche,
**dadurch gekennzeichnet, dass** jeder der Fluidanschlüsse (16, 18, 20) des Kernelements (12) an seiner Außenseite eine Mehrzahl von rippenartigen Erhebungen (28) aufweist, welche dazu eingerichtet ist, auf eine Anordnung einer Fluidleitung (22) an dem Fluidanschluss (16, 18, 20) und ein Verpressen der Presshülse (32) hin, mit der Fluidleitung (22) in Eingriff zu treten, um diese gegenüber Auszugskräften zu sichern, und/oder
dass in einem jeweiligen Bereich (34) der wenigstens zwei Schalenelemente (14), welcher einen Fluidanschluss (16, 18, 20) radial außen umgibt, an einer Innenseite der Schalenelemente (14) eine Mehrzahl von rippenartigen Erhebungen (30) angeordnet ist, welche dazu eingerichtet ist, auf eine Anordnung einer Fluidleitung (22) an dem Fluidanschluss (16, 18, 20) und ein Verpressen der Presshülse (32) hin, mit der Fluidleitung (22) in Eingriff zu treten, um diese gegenüber Auszugskräften zu sichern.

6. Fluidkopplung (10) nach einem der vorhergehenden Ansprüche, gegebenenfalls nach Anspruch 2 oder Anspruch 4,
**dadurch gekennzeichnet, dass** an wenigstens einem der Schalenelemente (14) ein Anschlag (24) vorgesehen ist, welcher dazu eingerichtet ist, ein Aufschieben einer jeweiligen Fluidleitung (22) auf einen Fluidanschluss (16, 18, 20) zu begrenzen, wobei insbesondere der Anschlag (24) für die Fluidleitung (22) an dem Vorsprung (24) zum Eingriff mit dem Kernelement (12) ausgebildet ist, und/oder
dass an wenigstens einem der Schalenelemente (14) eine Kontaktfläche (36) vorgesehen ist, welche dazu eingerichtet ist, ein Aufschieben einer jeweiligen Presshülse (32) auf die Schalenelemente (14) im montierten Zustand der Fluidkopplung (10) zu begrenzen,
wobei insbesondere ein Abstand des Anschlags (24) für die Fluidleitung (22) von einem benachbarten freien Ende der Schalenelemente (14) im montierten Zustand der Fluidkopplung (10) größer ist als ein Abstand der Kontaktfläche (36) für die Presshülse (32) von demselben freien Ende der Schalenelemente (14).

7. Fluidkopplung (10) nach einem der vorhergehenden Ansprüche,
**dadurch gekennzeichnet, dass** die wenigstens zwei Schalenelemente (14) Kunststoff, insbesondere Polybutylenterephthalat (PBT) und/oder faserverstärkte Polymere, wie Polyamid und/oder Polypropylen, umfassen, und/oder
dass das Kernelement (12) Kunststoff, insbesondere Polyoxymethylen (POM) oder vernetztes Polyethylen (PE-Xc), umfasst.

8. Fluidkopplung (10) nach einem der vorhergehenden Ansprüche,
**dadurch gekennzeichnet, dass** die wenigstens zwei Schalenelemente (14) als zueinander identische Schalenelemente (14) ausgebildet sind.

9. Fluidkopplung (10) nach einem der vorhergehenden Ansprüche,
**dadurch gekennzeichnet, dass** die wenigstens zwei Schalenelemente (14) frei von zueinander kompatiblen Rastelementen sind, welche dazu eingerichtet sind, die Schalenelemente (14) aneinander zu sichern.

10. Fluidkopplung (10) nach einem der vorhergehenden Ansprüche,
**dadurch gekennzeichnet, dass** die wenigstens zwei Schalenelemente (14) im montierten Zustand der Fluidkopplung (10), mit Ausnahme der Bereiche (34) der Schalenelemente (14), welche die Fluidanschlüsse (16, 18, 20) radial außerhalb überlagern, im Wesentlichen geschlossen ausgebildet sind.

11. Fluidkopplung (10) nach einem der vorhergehenden Ansprüche,
**dadurch gekennzeichnet, dass** eine jeweilige Presshülse (32) als im Wesentlichen zylindrische Metallhülse ausgebildet ist.

12. Fluidkopplung (10) nach einem der vorhergehenden Ansprüche,
**dadurch gekennzeichnet, dass** eine jeweilige Presshülse (32) an wenigstens einem Längsende, insbesondere an beiden Längsenden, einen Bund aufweist.

13. Fluidkopplung (10) nach einem der vorhergehenden Ansprüche,
**dadurch gekennzeichnet, dass** die wenigstens zwei Schalenelemente (14) an ihren Außenseiten in einem Bereich (44), welcher zwischen den Fluidanschlüssen (16, 18) angeordnet ist, eine sich nach radial außen erstreckende Auswölbung (46) aufweisen.

14. Fluidkopplung (10) nach einem der vorhergehenden Ansprüche,
**dadurch gekennzeichnet, dass** sich die Stege (40) im montierten Zustand der Fluidkopplung (10) parallel zueinander erstrecken.

## Claims

1. Fluid coupling (10) which is configured to fluidically connect fluid lines (22) to each other, wherein the fluid coupling (10) comprises:
- a first fluid connection (16) which is configured to be fluidically connected to a first of the fluid lines,
- a second fluid connection (18) which is configured to be fluidically connected to a second of the fluid lines (22), and
- at least two shell elements (14),
wherein the fluid connections (16, 18, 20) are formed separately from each other,
wherein the fluid connections (16, 18, 20) are fluidically connected to each other in order to fluidically connect the fluid lines (22) which are connected to the fluid coupling (10) to each other,
wherein the fluid connections (16, 18, 20) are formed integrally on a common core element (12) of the fluid coupling (10), wherein the at least two shell elements (14) are configured to surround the core element (12) at each of the first and second fluid connections (16, 18) at the respective radial outer side thereof,
**characterized in that** the fluid coupling (10) further comprises for each fluid connection (16, 18, 20) a pressing sleeve (32) which is configured to be received at a portion (34), which surrounds a respective fluid connection (16, 18, 20) radially at the outer side, of the at least two shell elements (14),
wherein the respective pressing sleeve (32) is further configured to be plastically deformed in a radially inward direction in response to a force acting radially outwards on the pressing sleeve (32) so that a corresponding fluid line (22) is connected in a non-releasable non-destructive manner to the respective associated fluid connection (16, 18, 20), and
wherein the at least two shell elements (14) in the region which is configured to receive a respective pressing sleeve (32) have a plurality of resilient webs (40), wherein the webs (40) in the mounted state of the fluid coupling (10) extend in particular parallel to each other.

2. Fluid coupling (10) according to claim 1,
**characterized in that** the core element (12) has on the outer side thereof at least one recess (26), in particular at least two recesses (26), which is/are configured to engage with a matching projection (24) which protrudes from an inner side of at least one shell element (14).

3. Fluid coupling (10) according to the preceding claim,
**characterized in that** the at least one recess (26) is in the form of a groove which extends completely around the outer side of the core element (12).

4. Fluid coupling (10) according to claim 2 or 3,
**characterized in that** the projection (24) which is configured to engage with the associated recess (26) of the core element (12) in the mounted state of the fluid coupling (10) is formed to be divided in such a manner over the at least two shell elements (14) that the projection portions of the shell elements (14) in the mounted state of the fluid coupling (10) complement each other to form a projection (24) which extends substantially completely around the core element (12).

5. Fluid coupling (10) according to any one of the preceding claims,
**characterized in that** each of the fluid connections (16, 18, 20) of the core element (12) has at the outer side thereof a plurality of rib-like protrusions (28) which are configured, in response to an arrangement of a fluid line (22) on the fluid connection (16, 18, 20) and a pressing of the pressing sleeve (32), to move into engagement with the fluid line (22) in order to secure it against extraction forces, and/or
**in that** in a respective region (34) of the at least two shell elements (14), which surrounds a fluid connection (16, 18, 20) radially at the outer side, there is arranged on an inner side of the shell elements (14) a plurality of rib-like protrusions (30) which are configured, in response to an arrangement of a fluid line (22) on the fluid connection (16, 18, 20) and a pressing of the pressing sleeve (32), to move into engagement with the fluid line (22), in order to secure it against extraction forces.

6. Fluid coupling (10) according to any one of the preceding claims, where applicable according to claim 2 or claim 4,
**characterized in that** on at least one of the shell elements (14) there is provided a stop (24) which is configured to limit pushing of a respective fluid line (22) onto a fluid connection (16, 18, 20), wherein in particular the stop (24) for the fluid line (22) on the projection (24) is formed for engagement with the core element (12), and/or
**in that** on at least one of the shell elements (14) there is provided a contact face (36) which is configured to limit pushing of a respective pressing sleeve (32) onto the shell elements (14) in the mounted state of the fluid coupling (10),
wherein in particular a spacing of the stop (24) for the fluid line (22) from an adjacent free end of the shell elements (14) in the mounted state of the fluid coupling (10) is greater than a spacing of the contact face (36) for the pressing sleeve (32) from the same free end of the shell elements (14).

7. Fluid coupling (10) according to any one of the preceding claims,
**characterized in that** the at least two shell elements (14) comprise plastics material, in particular polybutylene terephthalate (PBT) and/or fibre-reinforced polymers, such as polyamide and/or polypropylene, and/or
**in that** the core element (12) comprises plastics material, in particular polyoxymethylene (POM) or cross-linked polyethylene (PE-Xc).

8. Fluid coupling (10) according to any one of the preceding claims,
**characterized in that** the at least two shell elements (14) are in the form of mutually identical shell elements (14).

9. Fluid coupling (10) according to any one of the preceding claims,
**characterized in that** the at least two shell elements (14) are free from mutually compatible locking elements which are configured to secure the shell elements (14) to each other.

10. Fluid coupling (10) according to any one of the preceding claims,
**characterized in that** the at least two shell elements (14) in the mounted state of the fluid coupling (10), with the exception of the regions (34) of the shell elements (14) which radially overlap the fluid connections (16, 18, 20) at the outer side, are formed to be substantially closed.

11. Fluid coupling (10) according to any one of the preceding claims,
**characterized in that** a respective pressing sleeve (32) is in the form of a substantially cylindrical metal sleeve.

12. Fluid coupling (10) according to any one of the preceding claims,
**characterized in that** a respective pressing sleeve (32) has a collar at least at one longitudinal end, in particular at both longitudinal ends.

13. Fluid coupling (10) according to any one of the preceding claims,
**characterized in that** the at least two shell elements (14) have at the outer sides thereof in a region (44) which is arranged between the fluid connections (16, 18) a protuberance (46) extending radially outward.

14. Fluid coupling (10) according to any one of the preceding claims,
**characterized in that** the webs (40) in the mounted state of the fluid coupling (10) extend parallel to each other.

## Revendications

1. Raccord fluidique (10) conçu pour mettre en communication fluidique des conduites de fluide (22) entre elles, le raccord fluidique (10) comprenant :
- un premier connecteur de fluide (16) conçu pour être relié de manière fluidique à une première des conduites de fluide,
- un deuxième connecteur de fluide (18) qui est conçu pour être relié de manière fluidique à un deuxième des conduits de fluide (22), et
- au moins deux éléments de coque (14),
dans lequel les connecteurs de fluide (16, 18, 20) sont adaptés de manière séparée les uns des autres,
dans lequel les connecteurs de fluide (16, 18, 20) sont en communication fluidique les uns avec les autres afin de relier fluidiquement entre elles les conduites de fluide (22) reliées au raccord fluidique (10),
dans lequel les connecteurs de fluide (16, 18, 20) sont formés d'un seul tenant sur un élément central commun (12) du raccord fluidique (10),
dans lequel les au moins deux éléments de coque (14) sont conçus pour entourer l'élément central (12) au niveau de chacun des premier et deuxième raccords fluidique (16, 18) sur leur côté radial extérieur respectif,
**caractérisé en ce que** le raccord fluidique (10) comprend en outre, pour chaque connecteur fluidique (16, 18, 20), une douille de serrage (32) qui est conçue pour être logée sur une partie (34) entourant radialement à l'extérieur un connecteur fluidique respectif (16, 18, 20) des au moins deux éléments de coque (14),
dans lequel la douille de serrage respective (32) est en outre conçu pour être déformé plastiquement vers l'intérieur radialement sous l'effet d'une force agissant radialement vers l'extérieur sur la douille de serrage (32), de sorte qu'une conduite de fluide correspondante (22) est reliée de manière indémontable et non destructive au raccord fluidique respectif (16, 18, 20), et
dans lequel les au moins deux éléments de coque (14) présentent, dans la zone qui est conçue pour recevoir une douille de serrage (32) respective, une pluralité de nervures élastiques (40), les nervures (40) s'étendant en particulier parallèlement les unes aux autres à l'état monté du raccord fluidique (10).

2. Raccord fluidique (10) selon la revendication 1,
**caractérisé en ce que**
l'élément central (12) présente sur sa face extérieure au moins un évidement (26), en particulier au moins deux évidements (26), qui sont conçus pour s'engager respectivement avec une saillie correspondante (24) qui dépasse d'une face intérieure d'au moins un élément de coque (14).

3. Raccord fluidique (10) selon la revendication précédente,
**caractérisé en ce que**
ledit au moins un évidement (26) est réalisé sous la forme d'une rainure s'étendant sur tout le pourtour de la face extérieure de l'élément central (12).

4. Raccord fluidique (10) selon la revendication 2 ou 3,
**caractérisé en ce que**
la saillie (24), qui est conçue pour s'engager dans l'évidement correspondant (26) de l'élément central (12) lorsque le raccord fluidique (10) est monté, est répartie sur les au moins deux éléments de coque (14) de telle sorte que les parties en saillie des éléments de coque (14) se complètent, lorsque le raccord fluidique (10) est monté, pour former une saillie (24) s'étendant pratiquement tout autour de l'élément central (12).

5. Raccord fluidique (10) selon l'une des revendications précédentes,
**caractérisé en ce que**
chacun des raccords hydrauliques (16, 18, 20) de l'élément central (12) présente sur sa face extérieure une pluralité de saillies en forme de nervures (28) qui sont agencées de manière à s'engager avec la conduite de fluide (22), lors de la mise en place d'une conduite de fluide (22) sur le connecteur fluidique (16, 18, 20) et le serrage de la douille de serrage (32),
et/ou
**en ce que**, dans une zone respective (34) des au moins deux éléments de coque (14) qui entoure radialement à l'extérieur un connecteur fluidique (16, 18, 20), une pluralité de saillies en forme de nervures (30) est disposée sur une face intérieure des éléments de coque (14), laquelle est conçue pour s'engager avec une conduite de fluide (22) lors de la mise en place d'une conduite de fluide (22) sur le connecteur fluidique (16, 18, 20) et le serrage de la douille de serrage (32) pour la protéger contre les forces d'extraction.

6. Raccord fluidique (10) selon l'une des revendications précédentes, le cas échéant selon la revendication 2 ou la revendication 4,
**caractérisé en ce que**
une butee (24) est prévue sur au moins l'un des éléments de coque (14), laquelle est conçue pour limiter l'enfilage d'un conduite de fluide (22) respectif sur un connecteur fluidique (16, 18, 20), dans lequel notamment la butée (24) pour la conduite de fluide (22) est formée sur la saillie (24) destinée à s'engager avec l'élément central (12), et/ou
qu'une surface de contact (36) est prévue sur au moins l'un des éléments de coque (14), laquelle est conçue pour limiter l'enfilage d'une douille de serrage respective (32) sur les éléments de coque (14) à l'état monté du raccord fluidique (10),
dans lequel notamment une distance entre la butée (24) pour la conduite de fluide (22) et une extrémité libre voisine des éléments de coque (14) à l'état monté du raccord fluidique (10) est supérieure à une distance entre la surface de contact (36) pour la douille de serrage (32) et la même extrémité libre des éléments de coque (14).

7. Raccord fluidique (10) selon l'une des revendications précédentes,
**caractérisé en ce que**
les au moins deux éléments de coque (14) comprennent du plastique, en particulier du polybutylène téréphtalate (PBT) et/ou des polymères renforcés de fibres, tels que du polyamide et/ou du polypropylène, et/ou
**en ce que** l'élément central (12) comprend du plastique, en particulier du polyoxyméthylène (POM) ou du polyéthylène réticulé (PE-Xc).

8. Raccord fluidique (10) selon l'une des revendications précédentes,
**caractérisé en ce que**
les au moins deux éléments de coque (14) sont conçus comme des éléments de coque (14) identiques les uns aux autres.

9. Raccord fluidique (10) selon l'une des revendications précédentes,
**caractérisé en ce que**
les au moins deux éléments de coque (14) sont dépourvus d'éléments d'encliquetage compatibles entre eux, qui sont conçus pour fixer les éléments en forme de coque (14) les uns aux autres.

10. Raccord fluidique (10) selon l'une des revendications précédentes,
**caractérisé en ce que**
les au moins deux éléments de coque (14), dans l'état monté du raccord fluidique, à l'exception des zones (34) des éléments de coque (14) qui recouvrent radialement les connecteurs fluidiques (16, 18, 20), sont essentiellement adaptées de manière fermée.

11. Raccord fluidique (10) selon l'une des revendications précédentes,
**caractérisé en ce que**
une douille de serrage (32) respective est conçue comme une douille métallique essentiellement cylindrique.

12. Raccord fluidique (10) selon l'une des revendications précédentes,
**caractérisé en ce que**
une douille de serrage (32) respective présente un collet à au moins une extrémité longitudinale, en particulier aux deux extrémités longitudinales.

13. Raccord fluidique (10) selon l'une des revendications précédentes,
**caractérisé en ce que**
les au moins deux éléments de coque (14) présentent, sur leurs côtés extérieurs, dans une zone (44) située entre les connecteurs fluidiques (16, 18), un renflement (46) s'étendant radialement vers l'extérieur.

14. Raccord fluidique (10) selon l'une des revendications précédentes,
**caractérisé en ce que**
à l'état monté du raccord fluidique (10), les nervures (40) s'étendent parallèlement les unes aux autres.
